# EUROPEAN PATENT SPECIFICATION

(11) **EP 4 009 292 B1**
(45) Date of publication and mention of the grant of the patent: **30.07.2025**
(21) Application number: 20211960.8
(22) Date of filing: 04.12.2020
(51) Int. Cl.: G07C 9/00

(54) **ACCESS CONTROL SYSTEM**
ZUGANGSSTEUERUNGSSYSTEM
SYSTÈME DE CONTRÔLE D'ACCÈS

(43) Date of publication of application: 08.06.2022
(73) Proprietor: Honeywell International Inc., Charlotte, NC 28202 (US)
(72) Inventor: Baczek, Rafal, 80-890 Gdansk (PL)
(74) Representative: Dehns

(56) References cited:
- JP-A- 2019 096 324
- US-A1- 2009 132 090
- US-A1- 2015 332 529
- US-A1- 2017 365 115
- US-A1- 2020 028 877

## Description

The present invention relates to an access control system and related methods for controlling access to a secure area. The access control system may for example be used as a part of a security system for a building.

It is known for access into or within buildings to be controlled in various situations, for example to ensure that only authorised persons can access a building, or parts of a building. Access routes such as doors can be controlled by an access control system, and may be opened by presenting credentials such as badges, QR (Quick Response) codes, mobile devices, etc. Such credentials often comprise a token embodied in the form of a physical object (e.g. an access card) and/or may comprise a token in electronic form that is associated with a physical object (e.g. a mobile device with suitable software). The credentials may also or alternatively comprise biometric identification of the user. Multiple identification means may be required in combination to confirm that the user is an authorised person, such as via two or more of a physical token, PIN entry and/or biometric identification. This improves security, for example by avoiding the risk of an unauthorised user gaining access via a lost or stolen physical token.

Various examples of access control systems may be found in the prior art, such as within WO 2018/160560 A1, which is an example of a physical access control system using a physical token to control access to areas of a building. Another known access control system is marketed as BlueDiamond^{™}. Another known access control system is described in US 2020/312070 A1, which includes details of particular handling of entry protocols. In typical access control systems the user presents their credentials to an access control point, such as a card reader or other sensor, and the access control system determines if the user is authorised to pass the access control point based on permissions set by an administrator. For example, in the case of a door the access control system may enable opening of the door if the permissions set by the administrator show that the user is authorised to enter the area past the door.

For prior art systems the permissions that determine access rights may be set on a static basis, or on a dynamic basis. Static policies may for example act to allow access for a fixed set or category of users for each secure area, with those users being permitted access whenever they request access, which may be done by presenting their credentials to the access control system, e.g. via a card reader. Dynamic policies are those that are reactive to changing characteristics of the building or its occupants. For example, prior art systems may prevent access to an area once it has reached a set maximum capacity. In that case a user may be authorised to enter an area but may nonetheless not be permitted to enter if the area has already reached a maximum capacity. As with the static policies, these dynamic policies rely on permissions that are set by an administrator so that the user can only access the secure area once they have satisfied one or more policies set by an administrator. The administrator level permissions and policies may for example be determined by the owner of a building or an employer of the user.

US 2009/132090 A1 discloses a system for controlled access to refrigerated medications. User level authorisation holders may present credentials in order to have access to the stored medications. Supervisor level authorisation holders may further have access to make changes to settings including alarm levels.

Viewed from a first aspect, the invention provide an access control system for controlling access to at least one secure area, the access control system comprising: credentials associated with a user and being for identifying the user to the access control system; administrator level permissions that have been set by an administrator and being for determining if the user is an authorised person in order to control access to the at least one secure area; and user level permissions that have been set by the user and being for determining if accessing the at least one secure area is in accordance with user preferences; wherein the access control system is arranged to permit access to the at least one secure area when presented with credentials that both identify the user as being an authorised person for that secure area and also confirm that access by the user is in line with the user preferences.

Thus, with this arrangement access is not permitted only when the user is an authorised person, but it must also be the case that access is in line with the user preferences. In effect, the invention may require a "must have" and a " must meet" set of criteria, wherein the user must have permissions given by administrator to access the secure area, and wherein the secure area must meet the user expectations . This allows the administrator to set permissions that control access to and also optionally exit from the secure area, which may be one of multiple secure areas, whilst the user preferences can override those permissions and prevent access (even when authorised by the administrator level permissions) if the access by the user is not in line with the user preferences. The access control system may control exit from the at least one secure area, with the access control system being arranged to permit exit from the at least one secure area when presented with credentials that both identify the user as being an authorised person for leaving that secure area and also to confirm that exit by the user is in line with the user preferences.

As discussed further below, the user preferences may comprise characteristics of the secure area that the user deems acceptable, e.g. safe or unsafe, such as a maximum number or density of other occupants. In known access systems the access control is based on administrator level permissions only, and there is not any added level of permissions taking account of user preferences in addition to the administrator level permission. The access control system provides advantages over those known systems by extending the access control decision to include the user preferences as well as the administrator level permissions.

The user can advantageously define situations when they would prefer to be prevented from accessing the secure area. The user may optionally also define situations where they wish to be notified of characteristics of the secure area prior to entry, such as via an audible alarm or a visual message. Thus, the access control system may comprise user level permissions (based on user preferences) which would prevent access if not met, as well as user level notification criteria (also based on user preferences), which would trigger a notification if not met. For example, a user may not wish to enter a secure area if the temperature is outside of a certain range, where as a user may find it acceptable to enter a secure area if the temperature is within that range but outside of a narrower threshold range where the user would like to be notified prior to entering the area.

The secure area may comprise an area of a building, such as the inside of the building or a part thereof, for example a room or a set of rooms. The access control system may control access to multiple secure areas, optionally with differing administrator level permissions and user level preferences applying to each one of the multiple secure areas. The access control system may control doors or other access routes in order to control access to the secure areas.

The access control system proposed herein comprises an added level of control for access to the secure area(s) with input directly from the user. Thus, the user can set the user level permissions without any need for administrator level involvement. The ability of the user to directly set their own permissions, based on their preferences, is not a feature of prior systems where only administrator permissions are used within the access control. The access control system may have an administrator input module accessible only to a set of operators with administrator level access to the system, and a user input module accessible only to the user.

The input modules may be implemented via suitable software and/or hardware. The administrator input module may allow for administrator control in a similar way to a prior art access control system. For example, the administrator input module may be a part of a secure system operated by the building owner or an employer company and may be configured for overall control of access to the secure area(s). In particular, the user may not be permitted any access to the secure area(s) unless they are identified as an authorised user via the administrator level permissions set via the administrator input module. The user may not have access to the administrator input module and/or may not be authorised to change the administrator level permissions. The access control system may comprise hardware for enabling an authorised person acting at the administrator level to use the administrator input module to set administrator level permissions, such as hardware comprising a computer system where the authorised person accesses the input module via a computer terminal or mobile device.

In example embodiments, the administrator input module may have the ability to define parameters that the user can adjust by use of the user input module, but advantageously the administrator input module does not have the capability to change the user level permissions. Instead, in example embodiments the user level permissions may only be changed by the user acting via the user input module. Hence, the proposed access control system has two separate sets of permissions each being required to be satisfied for entry to a secure area, with one set by the administrator (e.g. via an authorised person as above) and the other set by the user.

In some instances the administrator as well as the user may have access to change the user level permissions via the user input module. This can allow greater flexibility. Alternatively, to ensure separate technical features for changes by the user and changes by the administrator then the user input module can be accessible only to the user as noted above. In such a case the administrator may alternatively have the ability to set permissions based on similar dynamic policies for each user via the administrator input module.

Each user advantageously only has access to modify their own user level permissions, so that they cannot change these for other users. The user input module advantageously does not enable the user to change the administrator level permissions, but gives the user access to adjust the user level permissions in line with user preferences. Thus, the user (and in example embodiments, not the administrator) has control of certain preferences, such as those discussed below. The access control system may comprise hardware for enabling the user to set user level permissions via the user input module, such as hardware comprising a computer system where the user accesses the input module via a computer terminal or mobile device. In some examples, the user input module may be accessed via a reader or terminal of the access control system and/or may be accessed via a user device, which may be a device known to and trusted by the user. For example, the user input module may be accessed and/or may include the user's mobile device (e.g. a smartphone). In some cases, as set out below, the user's mobile device may also be used to present the user's credentials to the access control system.

The user preferences may take into account characteristics of the secure area and/or of systems/environments within the secure area. The user preferences may also take account of the time of day and/or external factors, such as the weather. Historical information may also be taken into account, such as the time spent in the secure area or other areas in a prior time period and/or the number of visits in the prior time period. In example implementations the user preferences may define characteristics that the user considers acceptable or unacceptable in terms of permitting entry into the secure area(s). The assessment of what is acceptable may take into account safety, health, performance targets and so on. In line with the user preferences the user input module enables the user to determine the user level permissions, which are assessed in combination with the administrator level permissions to determine if access is to be permitted, for example if a door is to be opened. The user level permissions may comprise static and/or dynamic policies along the same lines as the administrator level permissions discussed below.

It will be appreciated that access control for a secure area in the form of a space within a building may be for passage in one direction or another, e.g. in or out, or in both directions. With this in mind it will be realised that the discussion herein may apply to transit from one location to another, through a controlled access, with the permission of access by the access control system taking account of relevant administrator level permissions and of relevant user level permissions with respect to the area that the user will move into. There may hence be a need to determine if, having entered a first location, the user should be permitted access to exit the first location and move into a second location. In this context the first location and/or the second location may be a secure area as in the other discussion herein, but it is not necessary that both locations are secure areas. The use of the access control system to determine whether or not to permit access to exit a location may apply even if the user is intending to move back into a location from which they originated, since a change in characteristics of that location may influence the permissions. For example, if user preferences dictate temperature or occupancy requirements then returning to a previous area may not be in line with the user preferences following changes that have occurred.

The access control system may take account of the user level permissions (in line with the user preferences), and optionally the user level notification criteria (if present) in relation to exiting from the secure area as well as entering the secure area. This may be done even if the area outside of the secure area is not otherwise restricted or controlled by administrator level permissions, such as if it is a communal area freely accessible by all or if it is fully outside of the control of the access control system, such as an outdoor space. In some examples the user preferences include characteristics of such areas that are not considered safe or suitable for the user, or require a notification (e.g. to prompt a change in attire or other precaution). In the case of an outside location that might include temperature, UV index, air pollution level, data from early warning systems for weather anomalies and hazards (or natural disasters, e.g. earthquake or tsunami) and so on.

Information regarding the user preferences and/or the user level permissions may be stored on any device, such as on a smart card, on a mobile device (e.g. the user's smartphone), on a system database and so on.

The characteristics of the secure area taken into account for the user preferences may include one or more of:
- threshold environment parameters to be satisfied for entry into the secure area, such as one or more of temperature, cleanliness (e.g. timing since cleaning or meeting a certain quality of disinfection process), door or window status (e.g. requiring fully closed, or requiring at least one opening into outside air etc.), air circulation levels, or noise levels, for example;
- assessment of operation of devices within the secure area, for example to avoid malfunction of some devices that the user considers to be dangerous.
- security status of the secure area, such as if a possible security breach (e.g. a break in) has been detected in order to allow a user to ensure that they avoid accidental contact with a burglar.
- detection of air quality by smoke detectors or any other suitable sensors, for example to avoid values not acceptable and/or deemed not safe according to user preferences (e.g. with respect to allergies, suspicion of a fire, sensitivity to odour and so on).
- numbers or density of other persons within the secure area, such as to avoid entering an area with an excessive number of occupants or occupants beyond a threshold value for a given floor area.
- presence or absence of specific other users or other categories of user, for example to only enter certain areas when other personnel are present, or to avoid direct contact with other personnel or specific personnel, such as those who may present a risk in relation to infectious disease.
- active and historical alarms/events known to the access control system, such as events resulting from the operation of devices and/or events resulting from human activity.
- data from external systems, such as cloud services, fire system, intelligent building systems etc.

In each case the above may vary depending on the day and/or time of day, as well as potentially varying depending on external input regarding the secure area. For example, with reference to situations such as the covid-19 pandemic, the user level permissions may include dynamic policies that change depending on a government risk level assessment.

The administrator level permissions may be set based on similar considerations to known access control systems. The administrator level permissions may be based on administrator policies determining if the user is permitted to access the secure area. These administrator policies may include static administrator policies indicating which of multiple users are authorised to access the secure area, with non-authorised users not being permitted access. The administrator policies may also or alternatively include dynamic administrator policies by which the administrator can set permissions based on dynamic events. For example, certain users may be prevented from accessing the secure area if there has been a security breach and/or users may be prevented from accessing the secure area if the area has already reached its maximum capacity. Another possible dynamic policy is for the administrator level permissions to only allow access to the user if predetermined personnel are present or are not present. For example, the administrator level permissions may restrict access to subordinate personnel unless a supervisor is present.

The administrator level permissions may be based on dynamic administrator policies equivalent to the dynamic policies set via the user level permissions, such as in relation to the characteristics of the secure area discussed below (e.g. environment parameters, operation of devices, security, air quality, persons, specific other users and so on). Thus, it may be possible for the administrator to control access for any given user based on similar considerations to the user preferences, and in parallel therewith, whilst the user cannot change/set the administrator level permissions and whilst the administrator cannot change/set the user level permissions. In this way there may be three levels of access control comprising: a "must have" requirement in terms of requiring basic authorisation to enter an area, as defined by static policies at the administrator level; an administrator set "must meet" requirement relating to variable characteristics of the secure area (e.g. temperature, occupancy, etc.) and a user set "must meet" requirement also relating to variable characteristics of the secure area.

The access control system uses credentials associated with a user for identification of the user, with access to the secure area(s) then being determined based on the administrator level permissions along with the user level permissions. The access to the secure area(s) may be permitted by opening and/or unlocking an access route, such as a door. The credentials may take physical and/or electronic form, and may be presentable by one or more hardware or software element. The credentials may comprise a token embodied in the form of a physical object (e.g. an access card) and/or may comprise a token in electronic form that is associated with a physical object (e.g. a mobile device with suitable software). The credentials may also or alternatively comprise biometric identification of the user. Multiple identification means may be required in combination to confirm that the user is an authorised person, such as via two or more of a physical token, PIN entry and/or biometric identification. This improves security, for example by avoiding the risk of an unauthorised user gaining access via a lost or stolen physical token. The credentials may, in example embodiments, take the form of one or more of cards (including smart cards), badges, QR (Quick Response) codes, mobile devices, electronic tags such as RFID tags and so on.

The access control system may comprise terminals for detection of the credentials and for interacting with a computer network of the access control system. For example, the access control system may comprise card readers, wireless terminals for interacting with mobile devices, and/or other sensors for detecting the credentials.

The access control system may differ from prior art access control systems only in relation to the software used and thus may not need any modification to the hardware. Advantageously this enables a retrofit/upgrade of existing systems without the need for installing new hardware. The access control system may readily integrate with mobile solutions, such as by permitting the user to set the user level permissions via their mobile device. It may also integrate readily with pre-existing access control systems such as BlueDiamond^{™}.

The dynamic policies of the user level permissions may be set based on personal contract terms, which define a set of relations between characteristics of the secure area such as system or environment parameters/status and the personal expectations of the individual user.

The user level permissions (e.g. as set based on personal contract terms) may have a lower priority than the administrator level permissions, but advantageously are required to be included if enabled. As noted above, the access control system may make an access decision based on permissions given by administrator as a "must have" requirement and then include the user level permissions (e.g. as set based on personal contract terms) as "must meet" requirements. Optionally, as discussed above, there may be additional "must meet" requirements set at administrator level.

The user level permissions can optionally be enabled/disabled by administrator, e.g. for specific users or in specific circumstances, such as in an emergency. The user level permissions accessible to the user to change (e.g. via the user level input module) may comprise all relevant characteristics of the secure area (e.g. as set based on all possible personal contract terms), or may comprise a subset of those characteristics, with this subset optionally being determined by the administrator.

Viewed from a second aspect, the present invention provides a method of controlling access to a secure area, the method comprising using the access control system of the first aspect. The method may include any of the other features discussed above. The method includes the steps of claim 14.

The method may include, prior to the steps of the first aspect, receiving, administrator level permissions via an administrator input module, for example as discussed above, and receiving user lever permissions via a user input module.

The method may include the administrator setting permissions that control access to the secure area, which may be one of multiple secure areas, and may include user setting the user level permissions that can override those administrator level permissions and prevent access (even when authorised by the administrator level permissions) if the access by the user is not in line with the user preferences. The method may include preventing access by the administrator to change the user level permissions as well as preventing access by the user to change the administrator level permissions.

As discussed further above, the user preferences may comprise any of various characteristics of the secure area. The method may comprise the user defining situations when they would prefer to be prevented from accessing the secure area and/or the access control system receiving suitable input from the user via an input module in order to define such situations. Optionally, the access control system may also receive input from the user to define user level notification criteria, which may be as discussed elsewhere herein.

The secure area may comprise an area of a building, such as the inside of the building or a part thereof, for example a room or a set of rooms. The method may include controlling access to multiple secure areas, optionally with differing administrator level permissions and/or user level preferences applying to each one of the multiple secure areas. The method may include controlling doors or other access routes in order to control access to the secure areas. The method may further include controlling exit from the secure area(s), which may be done based on administrator level permissions, user level permissions and/or user level notification criteria as discussed above.

The method may include the user setting the user level permissions without any need for administrator level involvement. The method may use an access control system having an administrator input module accessible only to a set of operators with administrator level access to the system, and a user input module accessible only to the user. The method may include using the administrator input module for receiving inputs for administrator control of the administrator level permissions. This may be done in a similar way to a prior art access control method. Advantageously the administrator input module does not have the capability to change the user level permissions. Instead, in example embodiments the method includes the user level permissions only being changed by the user acting via the user input module. Hence, the proposed access control method uses two separate sets of permissions each being required to be satisfied for entry to a secure area, with one set of permissions being set by the administrator (e.g. via an authorised person as above) and the other set of permissions being set by the user.

In some examples, method comprises the user accessing the user input module via a reader or terminal of the access control system and/or via a user device, which may be a device known to and trusted by the user, such as the user' mobile device, as discussed above. To allow for separate technical features for changes by the user and changes by the administrator then the administrator may alternatively have the ability to set permissions based on similar dynamic policies for each user via the administrator input module.

The user preferences may take into account characteristics of the secure area and/or of systems/environments within the secure area, such as those discussed above. The user preferences may also take account of the time of day and/or external factors, such as the weather. Historical information may also be taken into account, such as the time spent in the secure area or other areas in a prior time period and/or the number of visits in the prior time period.

The method may comprise storing information regarding the user preferences and/or the user level permissions. Such information may be stored on any device, such as on a smart card, on a mobile device (e.g. the user's smartphone), on a system database and so on.

The method may include the use of administrator level permissions based on static policies indicating which of multiple users are authorised to access the secure area, with non-authorised users not being permitted access. The policies may also or alternatively include dynamic policies by which the administrator can set permissions based on dynamic events. The method may also include the use of user level permissions set based on dynamic policies, as well as optionally user level notification criteria, also set based on dynamic policies. Thus, there may be multiple levels of control for the method, using assessment of administrator level permissions relating to access authorisation (in any circumstances, i.e. static policies); administrator level permissions relating to access conditions (context dependent, i.e. dynamic policies as discussed above); user level permissions relating to user preferences (context dependent, i.e. dynamic policies or personal contract terms as discussed above); and optionally user level notification criteria (context dependent, as discussed above) for which access is permitted but a warning notification is issued. The method may further include added control for exiting the secure area, as discussed above, even when the destination location is not itself a secure area or otherwise under the control of the access control system, such as being a communal space or a generally accessible outdoor location.

The access control method uses credentials associated with a user for identification of the user, with access to the secure area(s) then being determined based on the administrator level permissions along with the user level permissions. As discussed above, access to the secure area(s) may be permitted by opening and/or unlocking an access route, such as a door. The credentials may take physical and/or electronic form, and may be presentable by one or more hardware or software element. The credentials may be as discussed above. The administrator level permissions may be based on dynamic administrator policies equivalent to the dynamic policies set via the user level permissions, such as in relation to the characteristics of the secure area discussed above.

In this way the method may include using three levels of access control comprising: a "must have" requirement in terms of requiring basic authorisation to enter an area, as defined by static policies at the administrator level; an administrator set "must meet" requirement relating to variable characteristics of the secure area (e.g. temperature, occupancy, etc.) and a user set "must meet" requirement also relating to variable characteristics of the secure area.

The access control method may include using terminals for detection of the credentials and for interacting with a computer network of the access control system. For example, the access control method may comprise using card readers, wireless terminals for interacting with mobile devices, and/or other sensors for detecting the credentials.

Viewed from a third aspect, the present invention provides a computer programme product comprising instructions which, when executed will configure an access control system to operate in accordance with the method of the second aspect.

Certain example embodiments of the present disclosure will now be described in greater detail, by way of example only and with reference to the drawing, in which:

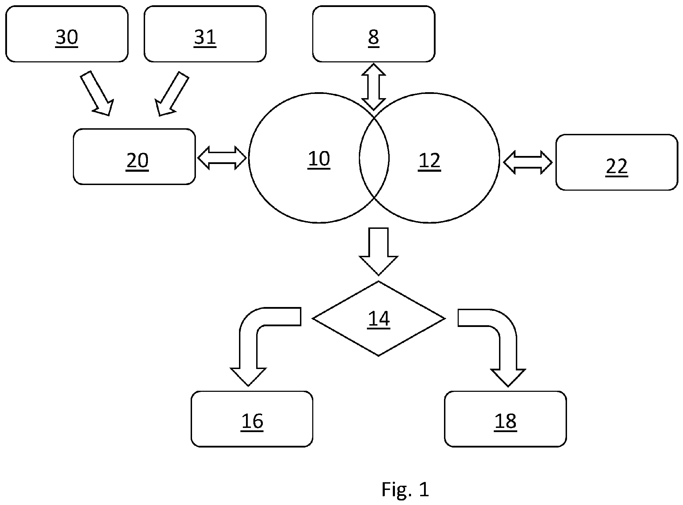

Figure 1 shows an access control system incorporating added user level permissions.

In a typical access control system, such as that of WO 2018/160560 A1, an administrator sets permissions and this determines if a user can access a secure area or not, such as a room of a building. The user presents credentials to the access control system, for example by presenting a card, badge, or mobile device to a reader or other terminal, and the credentials are used to identify the user. An access decision is made based on the permissions controlled by the administrator of the access control system. If the user is authorised for access to the secure area then the access is permitted, such as by opening or unlocking a door or other access route.

With the proposed access control system, as shown in Figure 1, there are multiple levels of permissions. In particular, the access control system comprises user level permissions 10 and administrator level permissions 12. These permissions 10, 12 may comprise dynamic or static policies as outlined above, and they may include areas of overlap as shown. An access decision 14 is made by the access control system based on both of the user level permissions 10 and the administrator level permissions 12. If both of the user level permissions 10 and the administrator level permissions 12 are satisfied then access is permitted 18, such as by opening or unlocking a door or other access route for the secure area. If either one of the user level permissions 10 or the administrator level permissions 12 are not satisfied then access is denied 16.

The access control system detects credentials 8 associated with a user and uses the credentials 8 for identifying the user, such as via a terminal (not shown) or any other suitable hardware and/or software as discussed above. The access control system is arranged to determine if the user is an authorised person based on the administrator level permissions 12 that have been set by an administrator; and also to determine if accessing the at least one secure area is in accordance with user preferences based on the user level permissions 10 that have been set by the user.

The access control system allows for setting and/or updating of the administrator level permissions 12 via an administrator input module 22, for example as discussed above, and allows for setting and/or updating of the user lever permissions 10 via a user input module 20.

The administrator input module 22 has the ability to define parameters that the user can adjust by use of the user input module 20, but the administrator input module 22 does not have the capability to change the user level permissions 10. In this embodiment, the user level permissions 10 can only be changed by the user acting via the user input module 20. Hence, the proposed access control system has two separate sets of permissions each being required to be satisfied for entry to a secure area, with one controlled only by the administrator (e.g. via an authorised person as above) and the other being controlled only by the user.

The user, via the user input module 20, adjusts the user level permissions 10 in line with user preferences. The user preferences take into account characteristics of the secure area and/or of systems/environments within the secure area. The user preferences may also take account of the time of day and/or external factors, such as the weather or other environment parameters. Historical information may also be taken into account, such as the time spent in the secure area or other areas in a prior time period and/or the number of visits in the prior time period.

The user preferences may also be used to determine user level notification criteria that can be taken into account at the same time as the user level permissions. The user preferences used for the user level notification criteria may be either in the same set of user preferences to those used for the user level permissions or they may be a different set of user preferences. The user level notification criteria can specify circumstances/characteristics where the user finds it acceptably to be permitted entry to the secure area (or other location, e.g. exiting the secure area) but wishes to be notified prior to entry.

User input module 20 may receive data in the form of internal data 30, such as data from the security system, and/or external data 31, such as data from other systems inside and/or outside the secure area, such as inside and/or outside a building or a room of a building. Thus, there may for example be input data from one or more of a fire system, an intrusion system, an intelligent building system, and/or cloud services like data from early warning systems for weather anomalies and hazards. This data may supply parameters enabling the input module to build a suitable set of user level permissions and user level notification criteria. Thus, the input module 20 may use the internal and/or external data to determine which preferences can be taken into account, such as via personal contract terms, and hence to determine what parameters to offer to the user when setting up the user level permissions and user level notification criteria. The access control system should thus have access to read the values of the related parameters this may be done by either the access control system (e.g. via a controller or processor thereof) or more specifically by the user input module.

The user input module can be separated from the other parts of the access control system. For example, it may be a separate application on the user's mobile device, this application may not be accessible by the administrator but may be configured to communicate with the access control system by secure and authorized connection. Thus, in that case the user level permissions (and optionally user level notification criteria can be evaluated by the user input module on the user device 20. In that case the access system will "ask" the user device 20 about the user level permissions (i.e. if they have been met) and the response from the user device 20 can be included during making of the access decision 14. The user device 20 may also be used for audible and/or visual notifications in relation to circumstances where the user has requested a notification before entering an area, as discussed elsewhere herein.

The hardware and software implementation of the access control system may incorporate similar features to existing systems, such as in relation to enabling unlocking of access doors and/or safe handling of credentials. The known systems of WO 2018/160560 A1 and/or US 2020/312070 A1 may for example be modified to incorporate the new features described herein.

The characteristics of the secure area taken into account for the user preferences may include one or more of:
- threshold environment parameters to be satisfied for entry into the secure area, such as one or more of temperature, cleanliness (e.g. timing since cleaning or meeting a certain quality of disinfection process), door or window status (e.g. requiring fully closed, or requiring at least one opening into outside air etc.), air circulation levels, or noise levels, for example;
- assessment of operation of devices within the secure area, for example to avoid malfunction of some devices that the user considers to be dangerous.
- security status of the secure area, such as if a possible security breach (e.g. a break in) has been detected in order to allow a user to ensure that they avoid accidental contact with a burglar.
- detection of air quality by smoke detectors or any other suitable sensors, for example to avoid values not acceptable and/or deemed not safe according to user preferences (e.g. with respect to allergies, suspicion of a fire, sensitivity to odour and so on).
- numbers or density of other persons within the secure area, such as to avoid entering an area with an excessive number of occupants or occupants beyond a threshold value for a given floor area.
- presence or absence of specific other users or other categories of user, for example to only enter certain areas when other personnel are present, or to avoid direct contact with other personnel or specific personnel, such as those who may present a risk in relation to infectious disease.
- active and historical alarms/events known to the access control system, such as events resulting from the operation of devices and/or events resulting from human activity.
- data from external systems, such as cloud services, fire system, intelligent building systems etc.

In each case the above may vary depending on the day and/or time of day, as well as potentially varying depending on external input regarding the secure area. For example, with reference to situations such as the covid-19 pandemic, the user preferences and the associated user level permissions may vary dependent on regulations in place as a result of national or local government. Thus, if a "lockdown" or otherwise increased level of restriction on citizens is declared then a more restrictive set of user preferences may be activated. Similarly, administrator controlled dynamic policies may be adjusted, such as to restrict the maximum occupancy of a room for all users.

The administrator level permissions are set based on similar considerations to known access control systems, such as that of WO 2018/160560 A1 and/or as in the BlueDiamond^{™} system. The administrator level permissions may be based on policies determining if the user is permitted to access the secure area. These policies may include static policies indicating which of multiple users are authorised to access the secure area, with non-authorised users not being permitted access. The policies may also or alternatively include dynamic policies by which the administrator can set permissions based on dynamic events. The administrator policies may overlap with the user preferences, but as noted above the control of them is separated.

By way of a specific example:
- Users U1 and U2 have access to Area A1 (via administrator level permissions given by administrator).
- User U1 has their own user level permissions (e.g. personal contract terms), which they have set for themselves (and which advantageously the administrator cannot change). In this example user U1 expects that temperature in Area A1 < 30 degrees C and does not wish to enter an area exceeding that temperature.
- User U2 has their own user level permissions (e.g. personal contract terms), which they have set for themselves (and which advantageously the administrator cannot change). In this example user U1 expects that temperature in Area A1 > 20 degrees C, and wishes to be warned if that condition is not met, i.e. access is permitted but a "warning" sound will notify the user.

In a first example circumstance, the current temperature in area A1 = 18 degrees.
- when user U1 presents their credentials (e.g. swipes their badge/card) to enter into area A1 then access will be permitted (e.g. the door will open/unlock) since user U1 has permission at administrator level and the user lever permissions (e.g. personal contract terms) are met.
- when user U2 presents their credentials (e.g. swipes their badge/card) to enter into area A1 presents their credentials (e.g. swipes their badge/card) but the card reader would play the "warning" sound notification.

In a second example circumstance the current temperature in area A1 = 32 degrees.
- when user U1 presents their credentials to enter into area A1 then access is not permitted, since although user U1 has permissions given by administrator the requirements of the user level permissions are not met.
- when user U2 presents their credentials to enter into area A1 then access is permitted and there is no warning sound, since user A2 has permissions given by the administrator and the requirements of the user lever permissions are met.

If the administrator removes permission for area A1 for either user U1 or U2 then they cannot enter into this area even if the temperature meets their expectations. If a user changes their expectations and hence makes changes to the user level permissions via the user level input module then the actions can be different. The user level permissions may include alternative or additional criteria such as those discussed above in relation to possible dynamic policies and characteristics of the secure area.

## Claims

1. An access control system for controlling access to at least one secure area, the access control system comprising:
credentials (8) associated with a user and being for identifying the user to the access control system;
administrator level permissions (12) that have been set by an administrator and being for determining if the user is an authorised person in order to control access to the at least one secure area; and
user level permissions (10) that have been set by the user and being for determining if accessing the at least one secure area is in accordance with user preferences;
wherein the access control system is arranged to permit access to the at least one secure area when presented with credentials that both identify the user as being an authorised person for that at least one secure area and also confirm that access by the user is in line with the user preferences.

2. An access control system as claimed in claim 1, wherein the at least one secure area comprises an area of a building; and wherein the access control system is configured to control doors or other access routes in order to control access to or exit from the at least one secure area.

3. An access control system as claimed in claim 1 or 2, comprising an administrator input module (22) configured to be accessible only to a set of operators with administrator level access to the system, and a user input module (20) configured to be accessible only to the user.

4. An access control system as claimed in claim 3, wherein the administrator input module (22) is a part of a secure system configured for overall control of access to the at least one secure area; and wherein the access control system is configured such that the user is not permitted any access to the at least one secure area unless they are identified as an authorised user via the administrator level permissions (12) set via the administrator input module.

5. An access control system as claimed in claim 3 or 4, wherein the access control system is configured such that the user does not have access to the administrator input module (22) and/or such that the user is not authorised to change the administrator level permissions (12).

6. An access control system as claimed in claim 3, 4 or 5, wherein the administrator input module (22) is configured to define parameters that the user can adjust by use of the user input module (20); and wherein the administrator input module does not have the capability to change the user level permissions (10).

7. An access control system as claimed in any of claims 3 to 6, configured such that the user level permissions (10) can only be changed by the user acting via the user input module (20).

8. An access control system as claimed in any of claims 3 to 7, configured such that the user input module (20) does not enable the user to change the administrator level permissions (12); and configured such that the user input module gives the user access to adjust the user level permissions (10) in line with user preferences.

9. An access control system as claimed in any preceding claim, wherein the user preferences take into account characteristics of the at least one secure area and/or of systems/environments within the at least one secure area; and/or wherein the user preferences define characteristics that the user considers acceptable or unacceptable in terms of permitting entry into the at least one secure area with reference to safety.

10. An access control system as claimed in any preceding claim, further comprising user level notification criteria that have been set by the user and being for determining if the user should receive a notification of details relevant to the user preferences prior to access to the at least one secure area.

11. An access control system as claimed in any preceding claim, wherein the access control system is configured to control exit from the at least one secure area, with the access control system being arranged to permit exit from the at least one secure area when presented with credentials (8) that both identify the user as being an authorised person for leaving that at least one secure area and also to confirm that exit by the user is in line with the user preferences.

12. An access control system as claimed in any preceding claim, wherein the user preferences in relation to user level permissions (10) and/or user level notification criteria relate to one or more of:
- threshold environment parameters to be satisfied for entry into the at least one secure area and comprising one or more of temperature, cleanliness, door or window status, air circulation levels, noise levels or any other measured environment parameter or signal;
- assessment of operation of devices within the at least one secure area to avoid malfunction of some devices that the user considers to be dangerous;
- security status of the at least one secure area;
- detection of air quality by smoke detectors or any other suitable sensors;
- numbers or density of other persons within the at least one secure area; and/or
- presence or absence of specific other users or other categories of user;
- active and historical alarms/events known to the access control system, such as events resulting from the operation of devices and/or events resulting from human activity;
- historical, current or predicted state(s) of access control system or area;
- signals or data from external systems or cloud services.

13. An access control system as claimed in any preceding claim, wherein the administrator level permissions (12) are based on policies determining if the user is permitted to access the at least one secure area; and wherein these policies include static policies and dynamic policies.

14. A method of controlling access to at least one secure area, the method comprising, using the access control system of any preceding claim: the access control system detecting credentials (8) associated with a user and using the credentials for identifying the user; determining if the user is an authorised person based on administrator level permissions (12) that have been set by an administrator; and determining if accessing the at least one secure area is in accordance with user preferences based on user level permissions (10) that have been set by the user; wherein user is permitted access to the at least one secure area by the access control system when the credentials both identify the user as being an authorised person for that at least one secure area and also confirm that access by the user is in line with the user preferences.

15. A computer programme product comprising instructions which, when executed will configure an access control system to operate in accordance with the method of claim 14.

## Patentansprüche

1. Zugangssteuerungssystem zum Kontrollieren des Zugangs zu mindestens einem sicheren Bereich, wobei das Zugangssteuerungssystem Folgendes umfasst:
Berechtigungsnachweise (8), die mit einem Benutzer assoziiert sind und dazu dienen, den Benutzer gegenüber dem Zugangssteuerungssystem zu identifizieren;
Administratorlevelberechtigungen (12), die von einem Administrator eingestellt wurden und dazu dienen, zu bestimmen, ob der Benutzer eine autorisierte Person ist, um den Zugang zu dem mindestens einen sicheren Bereich zu kontrollieren; und
Benutzerlevelberechtigungen (10), die vom Benutzer eingestellt wurden und dazu dienen, zu bestimmen, ob der Zugang in den mindestens einen sicheren Bereich in Übereinstimmung mit den Benutzerpräferenzen erfolgt;
wobei das Zugangssteuerungssystem angeordnet ist, um den Zugang zu dem mindestens einen sicheren Bereich zu gestatten, wenn Berechtigungsnachweise präsentiert werden, die sowohl den Benutzer als eine autorisierte Person für diesen mindestens einen sicheren Bereich identifizieren, als auch bestätigen, dass der Zugang des Benutzers mit den Benutzerpräferenzen übereinstimmt.

2. Zugangssteuerungssystem nach Anspruch 1, wobei der mindestens eine sichere Bereich einen Bereich eines Gebäudes umfasst; und wobei das Zugangssteuerungssystem konfiguriert ist, um Türen oder andere Zugangswege zu kontrollieren, um den Zugang zu oder das Verlassen des mindestens einen sicheren Bereichs zu kontrollieren.

3. Zugangssteuerungssystem nach Anspruch 1 oder 2, umfassend ein Administratoreingabemodul (22), das konfiguriert ist, um nur für einen Satz von Bedienern mit Administratorlevelzugang zum System zugänglich zu sein, und ein Benutzereingabemodul (20), das konfiguriert ist, um nur für den Benutzer zugänglich zu sein.

4. Zugangssteuerungssystem nach Anspruch 3, wobei
das Administratoreingabemodul (22) ein Teil eines sicheren Systems ist, das konfiguriert ist, um den Zugang zu dem mindestens einen sicheren Bereich zu kontrollieren;
und wobei das Zugangssteuerungssystem so konfiguriert ist, dass dem Benutzer kein Zugang zu dem mindestens einen sicheren Bereich gestattet wird, es sei denn, dass er als ein autorisierter Benutzer über die Administratorlevelberechtigungen (12), eingestellt über das Administratoreingabemodul, identifiziert wird.

5. Zugangssteuerungssystem nach Anspruch 3 oder 4, wobei das Zugangssteuerungssystem so konfiguriert ist, dass der Benutzer keinen Zugang zu dem Administratoreingabemodul (22) hat und/oder so, dass der Benutzer nicht autorisiert ist, die Administratorlevelberechtigungen (12) zu ändern.

6. Zugangssteuerungssystem nach Anspruch 3, 4 oder 5, wobei das Administratoreingabemodul (22) konfiguriert ist, um Parameter zu definieren, die der Benutzer unter Verwendung des Benutzereingabemoduls (20) anpassen kann; und wobei das Administratoreingabemodul nicht die Fähigkeit aufweist, die Benutzerlevelberechtigungen (10) zu ändern.

7. Zugangssteuerungssystem nach einem der Ansprüche 3 bis 6, so konfiguriert, dass die Benutzerlevelberechtigungen (10) nur von dem Benutzer geändert werden können, der über das Benutzereingabemodul (20) agiert.

8. Zugangssteuerungssystem nach einem der Ansprüche 3 bis 7, so konfiguriert, dass das Benutzereingabemodul (20) dem Benutzer nicht ermöglicht, die Administratorlevelberechtigungen (12) zu ändern; und so konfiguriert, dass das Benutzereingabemodul dem Benutzer Zugang gibt, um die Benutzerlevelberechtigungen (10) an die Benutzerpräferenzen anzupassen.

9. Zugangssteuerungssystem nach einem vorstehenden Anspruch, wobei die Benutzerpräferenzen Eigenschaften des mindestens einen sicheren Bereichs und/oder von Systemen/Umgebungen innerhalb des mindestens einen sicheren Bereichs berücksichtigen; und/oder wobei die Benutzerpräferenzen Eigenschaften definieren, die der Benutzer als akzeptabel oder inakzeptabel betrachtet in Bezug auf Gestatten des Zutritts zu dem mindestens einen sicheren Bereich in Bezug auf die Sicherheit.

10. Zugangssteuerungssystem nach einem vorstehenden Anspruch, weiter umfassend Benutzerlevelbenachrichtigungskriterien, die vom Benutzer eingestellt wurden und dazu dienen, zu bestimmen, ob der Benutzer vor dem Zugang zu dem mindestens einen sicheren Bereich eine Benachrichtigung über Details empfangen sollte, die für die Benutzerpräferenzen relevant sind.

11. Zugangssteuerungssystem nach einem vorstehenden Anspruch, wobei das Zugangssteuerungssystem konfiguriert ist, um den Austritt aus dem mindestens einen sicheren Bereich zu kontrollieren, wobei das Zugangssteuerungssystem angeordnet ist, um den Austritt aus dem mindestens einen sicheren Bereich zu gestatten, wenn Berechtigungsnachweise (8) präsentiert werden, die sowohl den Benutzer als eine zum Verlassen dieses mindestens einen sicheren Bereichs autorisierte Person identifiziert als auch bestätigt, dass der Austritt durch den Benutzer mit den Benutzerpräferenzen übereinstimmt.

12. Zugangssteuerungssystem nach einem vorstehenden Anspruch, wobei die Benutzerpräferenzen in Bezug auf Benutzerlevelberechtigungen (10) und/oder Benutzerlevelbenachrichtigungskriterien eines oder mehrere des Folgenden betreffen:
- Schwellenwertumgebungsparameter, die für den Eintritt in den mindestens einen sicheren Bereich erfüllt sein müssen und umfassend eines oder mehrere aus Temperatur, Sauberkeit, Tür- oder Fensterstatus, Luftzirkulationslevels, Geräuschlevels oder andere gemessene Umgebungsparameter oder -signale;
- Bewertung des Betriebs von Vorrichtungen innerhalb des mindestens einen sicheren Bereiches, um Fehlfunktionen einiger Vorrichtungen zu vermeiden, die der Benutzer als gefährlich betrachtet;
- Sicherheitsstatus des mindestens einen sicheren Bereichs;
- Detektion der Luftqualität durch Rauchdetektoren oder andere geeignete Sensoren;
- Anzahl oder Dichte anderer Personen innerhalb des mindestens einen sicheren Bereichs; und/oder
- Anwesenheit oder Abwesenheit spezifischer anderer Benutzer oder anderer Kategorien von Benutzern;
- aktive und historische Alarme/Ereignisse, die dem Zugangssteuerungssystem bekannt sind, wie Ereignisse, die sich aus dem Betrieb von Vorrichtungen ergeben und/oder Ereignisse, die sich aus menschlichen Aktivitäten ergeben;
- historische(r), aktuelle(r) oder vorhergesagte(r) Status (Stati) des Zugangssteuerungssystems oder des Bereichs;
- Signale oder Daten von externen Systemen oder Cloud-Diensten.

13. Zugangssteuerungssystem nach einem vorstehenden Anspruch, wobei die Administratorlevelberechtigungen (12) auf Richtlinien basieren, die bestimmen, ob dem Benutzer der Zugang zu dem mindestens einen sicheren Bereich gestattet ist; und wobei diese Richtlinien statische Richtlinien und dynamische Richtlinien einschließen.

14. Verfahren zum Kontrollieren des Zugangs zu mindestens einem sicheren Bereich, wobei das Verfahren Verwenden des Zugangssteuerungssystems nach einem der vorstehenden Ansprüche umfasst: das Zugangssteuerungssystem detektiert mit einem Benutzer assoziierte Berechtigungsnachweise (8) und verwendet die Berechtigungsnachweise zum Identifizieren des Benutzers; Bestimmen, ob der Benutzer eine autorisierte Person ist, basierend auf Administratorlevelberechtigungen (12), die von einem Administrator eingestellt wurden; und Bestimmen, ob der Zugang zu dem mindestens einen sicheren Bereich in Übereinstimmung mit den Benutzerpräferenzen ist, basierend auf Benutzerlevelberechtigungen (10), die von dem Benutzer eingestellt wurden; wobei dem Benutzer der Zugang zu dem mindestens einen sicheren Bereich durch das Zugangssteuerungssystem gestattet wird, wenn die Berechtigungsnachweise sowohl den Benutzer als eine autorisierte Person für diesen mindestens einen sicheren Bereich identifizieren als auch bestätigen, dass der Zugang durch den Benutzer mit den Benutzerpräferenzen übereinstimmt.

15. Computerprogrammprodukt, umfassend Anweisungen, die, wenn sie ausgeführt werden, ein Zugangssteuerungssystem konfigurieren, um in Übereinstimmung mit dem Verfahren nach Anspruch 14 zu arbeiten.

## Revendications

1. Système de contrôle d'accès destiné à contrôler l'accès à au moins une zone sécurisée, le système de contrôle d'accès comprenant :
des accréditations (8) associées à un utilisateur et servant à identifier l'utilisateur auprès du système de contrôle d'accès ;
des autorisations de niveau administrateur (12) qui ont été définies par un administrateur et sont destinées à déterminer si l'utilisateur est une personne autorisée afin de contrôler l'accès à l'au moins une zone sécurisée ; et
des autorisations de niveau utilisateur (10) qui ont été définies par l'utilisateur et sont destinées à déterminer si l'accès à l'au moins une zone sécurisée est conforme aux préférences d'utilisateur ;
dans lequel le système de contrôle d'accès est agencé pour permettre l'accès à l'au moins une zone sécurisée lorsqu'il est présenté avec des accréditations qui à la fois identifient l'utilisateur comme étant une personne autorisée pour cette au moins une zone sécurisée et confirment également que l'accès par l'utilisateur est en accord avec les préférences d'utilisateur.

2. Système de contrôle d'accès selon la revendication 1, dans lequel l'au moins une zone sécurisée comprend une zone d'un bâtiment ; et dans lequel le système de contrôle d'accès est configuré pour contrôler des portes ou d'autres voies d'accès afin de contrôler l'accès à l'au moins une zone sécurisée ou la sortie de celle-ci.

3. Système de contrôle d'accès selon la revendication 1 ou 2, comprenant un module d'entrée d'administrateur (22) configuré pour être accessible uniquement à un ensemble d'opérateurs ayant un accès de niveau administrateur au système, et un module d'entrée d'utilisateur (20) configuré pour être accessible uniquement à l'utilisateur.

4. Système de contrôle d'accès selon la revendication 3, dans lequel
le module d'entrée d'administrateur (22) fait partie d'un système sécurisé configuré pour le contrôle d'accès global à l'au moins une zone sécurisée ;
et dans lequel le système de contrôle d'accès est configuré de telle sorte que l'utilisateur n'est autorisé à aucun accès à l'au moins une zone sécurisée à moins qu'il ne soit identifié comme un utilisateur autorisé par le biais des autorisations de niveau administrateur (12) définies par le biais du module d'entrée d'administrateur.

5. Système de contrôle d'accès selon la revendication 3 ou 4, dans lequel le système de contrôle d'accès est configuré de telle sorte que l'utilisateur n'a pas accès au module d'entrée d'administrateur (22) et/ou de telle sorte que l'utilisateur n'est pas autorisé à modifier les autorisations de niveau administrateur (12).

6. Système de contrôle d'accès selon la revendication 3, 4 ou 5, dans lequel le module d'entrée d'administrateur (22) est configuré pour définir des paramètres que l'utilisateur peut ajuster en utilisant le module d'entrée d'utilisateur (20) ; et dans lequel le module d'entrée d'administrateur n'a pas les capacités de modifier les autorisations de niveau utilisateur (10).

7. Système de contrôle d'accès selon l'une quelconque des revendications 3 à 6, configuré de telle sorte que les autorisations de niveau utilisateur (10) peuvent uniquement être modifiées par l'utilisateur agissant par le biais du module d'entrée d'utilisateur (20).

8. Système de contrôle d'accès selon l'une quelconque des revendications 3 à 7, configuré de telle sorte que le module d'entrée d'utilisateur (20) ne permette pas à l'utilisateur de modifier les autorisations de niveau administrateur (12) ; et est configuré de telle sorte que le module d'entrée d'utilisateur donne à l'utilisateur l'accès d'ajuster les autorisations de niveau utilisateur (10) en accord avec des préférences d'utilisateur.

9. Système de contrôle d'accès selon une quelconque revendication précédente, dans lequel les préférences d'utilisateur prennent en compte des caractéristiques de l'au moins une zone sécurisée
et/ou de systèmes/environnements à l'intérieur de l'au moins une zone sécurisée ; et/ou dans lequel les préférences d'utilisateur définissent des caractéristiques que l'utilisateur considère comme acceptables ou inacceptables en termes d'autorisation d'entrée dans l'au moins une zone sécurisée en référence à la sécurité.

10. Système de contrôle d'accès selon une quelconque revendication précédente, comprenant en outre des critères de notification de niveau utilisateur qui ont été définis par l'utilisateur et sont destinés à déterminer si l'utilisateur doit recevoir une notification de détails pertinents pour les préférences d'utilisateur avant d'accéder à l'au moins une zone sécurisée.

11. Système de contrôle d'accès selon une quelconque revendication précédente, dans lequel le système de contrôle d'accès est configuré pour contrôler la sortie de l'au moins une zone sécurisée, le système de contrôle d'accès étant agencé pour autoriser la sortie de l'au moins une zone sécurisée lorsqu'il est présenté avec des accréditations (8) qui à la fois identifient
l'utilisateur comme étant une personne autorisée à quitter cette au moins une zone sécurisée et également confirment que la sortie par l'utilisateur est en accord avec les préférences d'utilisateur.

12. Système de contrôle d'accès selon une quelconque revendication précédente, dans lequel les préférences d'utilisateur en relation avec les autorisations de niveau utilisateur (10) et/ou les critères de notification de niveau utilisateur concernent un ou plusieurs des éléments suivants :
- des paramètres environnementaux de seuil à satisfaire pour entrer dans l'au moins une zone sécurisée et comprenant un ou plusieurs paramètres parmi la température, la propreté, l'état des portes ou des fenêtres, les niveaux de circulation d'air, les niveaux de bruit ou tout autre paramètre ou signal environnemental mesuré ;
- l'évaluation du fonctionnement des dispositifs à l'intérieur de l'au moins une zone sécurisée pour éviter le dysfonctionnement de certains dispositifs que l'utilisateur considère comme dangereux ;
- l'état de sécurité de l'au moins une zone sécurisée ;
- la détection de la qualité de l'air par des détecteurs de fumée ou tout autre capteur approprié ;
- le nombre ou la densité d'autres personnes à l'intérieur de l'au moins une zone sécurisée ; et/ou
- la présence ou l'absence d'autres utilisateurs spécifiques ou d'autres catégories d'utilisateurs ;
- les alarmes/événements actives (actifs) et historiques connu(e)s du système de contrôle d'accès, tels que des événements résultant du fonctionnement de dispositifs et/ou des événements résultant de l'activité humaine ;
- le (les) état(s) historique(s), actuel(s) ou prévu(s) du système de contrôle d'accès ou de la zone ;
- des signaux ou des données en provenance de systèmes externes ou de services de nuage.

13. Système de contrôle d'accès selon une quelconque revendication précédente, dans lequel les autorisations de niveau administrateur (12) sont basées sur des politiques déterminant si l'utilisateur est autorisé à accéder à l'au moins une zone sécurisée ; et dans lequel ces politiques incluent des politiques statiques et des politiques dynamiques.

14. Procédé destiné à contrôler l'accès à au moins une zone sécurisée, le procédé comprenant, en utilisant le système de contrôle d'accès selon une quelconque revendication précédente : détecter, par le système de contrôle d'accès, des accréditations (8) associées à un utilisateur et utiliser, par le système de contrôle d'accès, les accréditations pour identifier l'utilisateur ; déterminer si l'utilisateur est une personne autorisée sur la base des autorisations de niveau administrateur (12) qui ont été définies par un administrateur ; et déterminer si l'accès à l'au moins une zone sécurisée est conforme aux préférences d'utilisateur sur la base des autorisations de niveau utilisateur (10) qui ont été définies par l'utilisateur ; dans lequel l'utilisateur est autorisé à accéder à l'au moins une zone sécurisée par le système de contrôle d'accès lorsque les accréditations à la fois identifient l'utilisateur comme étant une personne autorisée pour cette au moins une zone sécurisée et également confirment que l'accès par l'utilisateur est en accord avec les préférences d'utilisateur.

15. Produit de programme d'ordinateur comprenant des instructions qui, lorsqu'elles sont exécutées, configureront un système de contrôle d'accès pour fonctionner conformément au procédé selon la revendication 14.
